# FASCICULE DE BREVET EUROPEEN

(11) **EP 1 856 901 B1**
(45) Date de publication et mention de la délivrance du brevet: **13.02.2013**
(21) Numéro de dépôt: 06709523.2
(22) Date de dépôt: 16.02.2006
(51) Int. Cl.: H04M 3/56, H04M 7/00

(54) **PROCEDE ET SYSTEME D'INFORMATION DES PARTICIPANTS A UNE CONVERSATION TELEPHONIQUE**
VERFAHREN UND SYSTEM ZUM LIEFERN VON INFORMATIONEN AN TEILNEHMER AN EINEM TELEFONGESPRÄCH
METHOD AND SYSTEM FOR SUPPLYING INFORMATION TO PARTICIPANTS IN A TELEPHONE CONVERSATION

(30) Priorité: 22.02.2005 FR 0501806
(43) Date de publication de la demande: 21.11.2007
(73) Titulaire: France Télécom, 75015 Paris (FR)
(72) Inventeur: JULIEN, Anne, F-78590 Noisy Le Roi (FR); BERNARD, Emmanuelle, F-75015 Paris (FR); GRANIER, Sébastien, F-75010 Paris (FR)
(86) Numéro de dépôt international: PCT/FR2006/050144
(87) Numéro de publication internationale: WO 2006/090080

(56) Documents cités:
- US-A- 6 072 780
- US-A1- 2003 035 381

## Description

L'invention concerne un procédé et système d'information des participants à une conférence téléphonique.

Des applications de type conférence téléphonique, conversation téléphonique de groupe ou audioconférence, existent aussi bien dans le domaine Internet dans lequel le flux vocal est transmis en utilisant des techniques dites de voix sur IP (VoIP), que dans le domaine de la téléphonie classique dans lequel le flux vocal est transmis par réseau cellulaire de type GSM/GPRS (Global System for Mobile communication / General Packet Radio Service), ou encore par réseau de téléphonie fixe de type PSTN (Public Switch Telephone Network) ou ISDN (Integrated System Digital Network).

Lors d'une audioconférence impliquant de nombreux participants, il peut être utile de bénéficier lors du déroulement de la conférence, par exemple par affichage ou par tout autre mode de signalement, d'une information sur l'identité du locuteur actif ou sur des événements tels que l'arrivée et/ou le départ d'un participant. L'affichage d'information sur l'identité du locuteur actif permet en particulier une identification non ambiguë du locuteur actif et apporte ainsi un confort d'écoute aux participants.

Parmi les applications existantes d'audioconférence permettant d'informer dynamiquement des participants sur le locuteur actif, on trouve les solutions d'audioconférence, qui utilisent un couplage entre deux terminaux distincts : d'une part un terminal de téléphonie en charge du flux vocal, et d'autre part un terminal de type ordinateur personnel pour la prise en charge de la réception et l'affichage des données relatives à la conférence en cours, l'identification des participants aux différentes conférences et l'identification du locuteur actif pour chacune de ces conférences.

Ce type de technique présente l'inconvénient de nécessiter deux terminaux différents et un couplage entre ces deux terminaux, pour assurer de manière simultanée et synchronisée la transmission, d'une part des données d'identification des participants, et d'autre part la transmission des flux vocaux.

D'autres solutions connues mettent en oeuvre un service de conversation téléphonique de type *Push-To-Talk over Cellular* (PoC) normalisé par l'organisme OMA (*Open Mobile Alliance*) à partir de terminaux GSM/GPRS standards. Dans un tel service, fonctionnant selon le principe du talkie-walkie, un participant doit se signaler avant de prendre la parole, par envoi d'une requête de demande de parole vers un serveur de mise en relation téléphonique permettant la gestion de la session de communication et des flux audio. Au cours de la conversation, le droit de parole est distribué aux participants par le serveur en fonction des requêtes reçues, un seul participant ayant la possibilité de parler à un moment donné. Dans une telle application, l'information concernant l'identité du locuteur actif est déterminée à partir du droit de parole attribué. Dans la mise en oeuvre en mode paquet du service PoC telle que normalisée par l'OMA, les trames des flux vocaux sont transmises selon le protocole RTP (Real Time Protocol), tandis que les données de contrôle de communication des flux vocaux ainsi que l'information concernant l'identité du locuteur sont transmises selon le protocole RTCP (Real Time Control Protocol) associé. Cependant ce type de service n'est applicable qu'à des communications en mode paquet, la mise en oeuvre en mode circuit du service PoC ne permettant pas de fournir aux participants de la conférence des informations sur le locuteur actif. Par conséquent le domaine d'application du service PoC en ce qui concerne la fourniture d'informations sur la conférence aux participants est restreint.

Le document de brevet US 6 072 780 A propose un système pour informer les participants de la conférence sur des événements tels que l'arrivée en conférence d'un participant. Cependant ce système n'est pas adapté à la mise en oeuvre du service au moyen d'un terminal unique pour chaque participant à la conférence. Il est relativement complexe car il suppose qu'un des participants possède un ordinateur personnel pour la mise en oeuvre d'une communication dédiée avec le commutateur du pont téléphonique de conférence afin de piloter ce commutateur et de recevoir des informations en retour. Enfin, ce système ne permet pas d'envoyer des informations relatives au locuteur actif.

L'invention a donc pour but de fournir un système pour informer les participants à une conférence téléphonique sur le déroulement de celle-ci, notamment en ce qui concerne l'identité du locuteur actif, ce système étant adapté notamment à l'utilisation d'un terminal unique pour chaque participant à la conférence, et aux communications en mode circuit en général.

Dans ce but, l'invention a pour objet, selon un premier aspect, un procédé pour informer les participants à une conférence téléphonique sur le déroulement de la conférence, la conférence étant mise en oeuvre au moyen d'une pluralité de terminaux accédant à un réseau de télécommunication, une liaison de communication étant établie entre chaque terminal et un serveur de conférence pour la transmission d'au moins un flux de données de conférence, le procédé étant remarquable en ce qu'il comporte les étapes suivantes au cours desquelles :
- une liaison de transmission de données est établie entre au moins un des terminaux et un serveur de données accédant audit réseau de télécommunication, la liaison de transmission de données étant indépendante de la liaison de communication établie pour le terminal considéré ;
- le serveur de conférence analyse les flux de données de conférence reçus en provenance des terminaux au cours de la conférence, détermine au moins un événement prédéfini relatif au déroulement de la conférence, génère des données d'identification d'événement pour chaque événement déterminé, et transfert les données d'identification au serveur de données ;
- le serveur de données analyse les données d'identification d'événement, génère des informations d'événement relatives aux événements identifiés, et transmet les informations d'événement, via au moins une liaison de transmission de données, à destination d'au moins un desdits terminaux pour lequel une liaison de transmission de données a été établie.

Avec un tel procédé, les participants à une conférence téléphonique disposent d'un service d'information en temps réel sur le déroulement de la conférence. Grâce à l'établissement d'une liaison de données distincte et indépendante de la liaison de communication classique, un terminal de téléphonie classique, à condition qu'il soit apte à l'établissement simultané de ces deux types de liaisons, accède à ce service d'informations. C'est le cas par exemple des terminaux de téléphonie mobile dits de troisième génération (3G - UMTS) ou bien de génération 2,5 (GPRS) de classe A.

D'autre part, la présence simultanée des deux liaisons distinctes et indépendantes précitées, l'une prenant en charge les flux vocaux (liaison de communication), et l'autre prenant en charge les flux de données d'informations (liaison de transmission de données) autorise l'utilisation du type de connexion dit en mode circuit pour la liaison de communication, indépendamment du type de connexion utilisé pour la liaison de transmission de données. Dans cette situation, on dispose de la qualité de transmission de la voix inhérente au mode circuit, tout en bénéficiant de la fonctionnalité apportée par le service d'information des participants mis en oeuvre par une liaison établie selon le mode paquet.

Par ailleurs, le service d'informations selon l'invention est également compatible avec des terminaux de téléphonie qui ne permettent pas l'établissement d'une seconde liaison destinée à la transmission de données. Dans ce cas, ces terminaux restent opérationnels dans un contexte où l'invention est mise en oeuvre, mais uniquement en ce qui concerne le transport de la voix. Par conséquent, le domaine d'application du procédé selon l'invention est très vaste.

Selon une caractéristique de l'invention, la liaison de transmission de données établie pour un terminal donné, est établie suite à la détection par le serveur de conférence de l'établissement de la liaison de communication avec ce terminal.

De cette manière, la liaison de transmission de données peut être établie très rapidement après qu'un participant ait rejoint la conférence par établissement de la liaison de communication pour la transmission des flux de données de conférence.

Selon une autre caractéristique de l'invention, la liaison de transmission de données établie pour un terminal donné est adaptée à la réception par le terminal considéré d'un flux de données simultanément à la réception des flux de données de conférence. Ces flux de données de conférence comprennent des flux vocaux, et selon les cas, d'autres flux, par exemple des flux de contrôle des flux vocaux.

De cette manière, la mise en place de la liaison de transmission de données ne perturbe pas la communication vocale établie par la liaison de communication pour la transmission des flux de données de conférence. Les terminaux de téléphonie mobile dits de troisième génération en particulier permettent d'établir simultanément une session de communication vocale en mode circuit et une session de transmission de données en mode paquet.

Selon une autre caractéristique de l'invention, chaque terminal destinataire des informations d'événement traite ces informations pour générer et afficher sur un écran équipant ce terminal des informations relatives à l'événement considéré. La visualisation par affichage des informations est particulièrement ergonomique et ne perturbe aucunement pour l'utilisateur du terminal le déroulement de la conférence téléphonique.

Selon une autre caractéristique de l'invention, les informations affichées sur l'écran de chaque terminal destinataire comprennent des informations sur l'identité du ou des utilisateurs présumés du ou des terminaux impliqués dans l'événement considéré.

Le procédé selon l'invention permet ainsi d'associer à des événements détectés par le serveur de conférence, des informations sur l'utilisateur présumé de chaque terminal impliqué dans l'événement considéré. Les serveurs de conférence connus fournissent déjà, à partir de téléphones standards, des indications sonores sur les événements de type "arrivée ou départ de participants", mais ces informations ne comprennent pas d'informations sur l'identité des participants impliqués dans l'événement. L'invention, au contraire, permet à un utilisateur d'un terminal adapté (3G par exemple) de recevoir des informations claires et explicites sur les événements détectés.

Selon une autre caractéristique de l'invention, les événements déterminés par le serveur de conférence sont compris dans l'ensemble constitué par: "entrée en conférence d'un participant", "sortie de conférence d'un participant", "identification d'un participant comme nouveau locuteur actif", "prise de parole d'un participant", "demande de parole d'un participant".

Le procédé selon l'invention permet par conséquent d'informer les participants à la conférence sur toutes sortes d'événements, notamment sur des événements détectables par le serveur de conférence à partir des flux de données de conférence.

En outre, en permettant de combiner la détection des événements précités avec la génération d'informations relatives à l'identité du ou des utilisateurs impliqués dans un événement considéré, le procédé selon l'invention fournit un service d'identification dynamique des locuteurs actifs.

Selon un mode de réalisation, le serveur de données envoie un message à destination d'au moins un desdits terminaux pour lequel une liaison de transmission de données a été établie afin de déclencher l'établissement de la liaison de transmission de données pour le terminal considéré et la transmission au cours de la conférence desdites informations d'événements via ladite liaison de transmission de données établie.

Selon un mode de réalisation particulier, lorsqu'un des terminaux est un terminal de téléphonie mobile, le serveur de données envoie à ce terminal, suite à l'établissement pour ce terminal de la liaison de communication, un message de type message court pour déclencher l'établissement de la liaison de transmission de données pour ledit terminal considéré ainsi que le lancement dans ce terminal d'un logiciel pour exécuter les opérations consistant à :
- recevoir lesdites informations d'événement via ladite liaison de transmission de données,
- traiter lesdites informations d'événement reçues pour générer des informations à afficher, et
- commander l'affichage par un écran équipant le terminal considéré desdites informations à afficher

L'invention ne nécessite ainsi aucune action spécifique de la part de l'utilisateur ni modification préalable du terminal du participant à la conférence, puisque les moyens logiciels nécessaires au traitement des informations d'événement peuvent être déclenchés à distance, voire téléchargés, de manière automatique, sans intervention de l'utilisateur du terminal.

Selon un autre aspect, l'invention a pour objet un serveur de données utilisé pour la mise en oeuvre d'un procédé selon l'invention, ce serveur comprenant :
- des moyens pour établir une liaison de transmission de données avec au moins un des terminaux, ladite liaison de transmission de données étant indépendante de la liaison de communication établie pour le terminal considéré ;
- des moyens pour recevoir dudit serveur de conférence des données d'identification d'événement relatif au déroulement de la conférence ;
- des moyens pour analyser lesdites données d'identification d'événement et générer des informations d'événement relatives aux événements identifiés ; et
- des moyens pour transmettre lesdites informations d'événement, via au moins une dite liaison de transmission de données, à destination d'au moins un desdits terminaux pour lequel une liaison de transmission de données a été établie.

Selon encore un autre aspect, l'invention a pour objet un serveur de conférence utilisé pour la mise en oeuvre d'un procédé selon l'invention, comprenant :
- des moyens pour analyser les flux de données de conférence reçus en provenance des terminaux au cours de la conférence, et déterminer au moins un événement prédéfini relatif au déroulement de la conférence ;
- des moyens pour générer des données d'identification d'événement pour chaque événement déterminé ; et
- des moyens pour transférer lesdites données d'identification audit serveur de données.

Les avantages énoncés plus haut pour le procédé selon l'invention sont également valables pour ce serveur de donnée et ce serveur de conférence.

D'autres buts, caractéristiques et avantages de l'invention apparaîtront à travers la description qui va suivre, donnée uniquement à titre d'exemple non limitatif, et faite par référence aux dessins annexés sur lesquels :
- la figure 1 représente schématiquement l'architecture d'un système de conférence téléphonique dans lequel l'invention peut être mise en oeuvre,
- les figures 2a à 2f illustrent de manière schématique différentes phases du procédé selon l'invention ainsi que les échanges de données entre les entités concernées par ces phases.

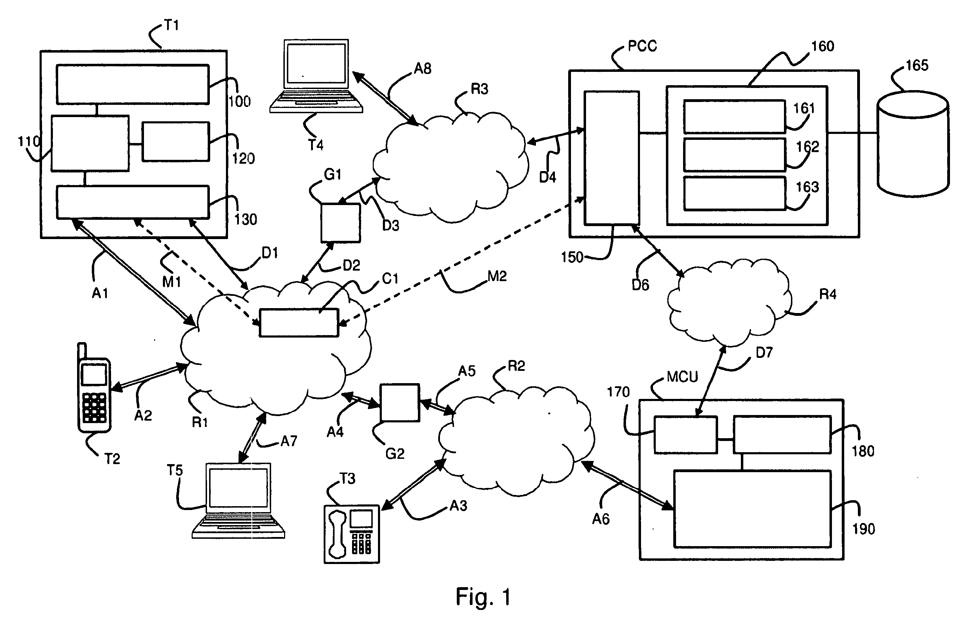

La figure 1 représente schématiquement l'architecture d'un système de conférence téléphonique. Le système représenté est articulé autour de différents réseaux de communication qui sont :
- un réseau de téléphonie mobile R1, par exemple de type GSM (Global System for Mobile communication), GPRS (General Packet Radio Service), UMTS (Universal Mobile Télécommunication System),
- un réseau de téléphonie fixe R2, par exemple de type PSTN ou ISDN,
- le réseau Internet R3,
- un réseau privé R4, par exemple de type Ethernet.

Le réseau R1 comporte un centre SMS (Short Message Service) C1 pour l'acheminement et le stockage temporaire des messages de type SMS via le réseau R1. Le réseau de téléphonie R1 est interconnecté au réseau Internet R3 via une passerelle G1 permettant aux usagers du réseau de téléphonie R1 d'accéder au réseau Internet R3. Les réseaux de téléphonie R1 et R2 sont également interconnectés via une passerelle G2.

Le système comporte en outre cinq terminaux T1 à T5. Dans cet exemple de réalisation, le terminal T1 est un téléphone mobile dit de troisième génération (terminal 3G) conçu pour accéder à un réseau de type UMTS. Le terminal T2 est lui un téléphone mobile de deuxième génération (terminal 2G ou 2,5G) conçu pour accéder à un réseau de type GPRS, tandis que le terminal T3 est un téléphone analogique de première génération (terminal 1 G). Un quatrième terminal T4, de type ordinateur personnel, est raccordé au réseau Internet R3. Il peut accéder à des applications de type audioconférence par utilisation des techniques de VoIP. Le terminal T5, de type ordinateur personnel, quant à lui accède au réseau R1 en mode circuit, par exemple au moyen d'une carte PCMCIA adaptée qui est intégrée dans ce terminal. Chaque terminal utilise un codec (codeur/décodeur) approprié pour l'émission et la réception des flux vocaux, ce codec étant fonction du terminal et adapté au réseau auquel ce terminal accède. Par exemple pour un réseau cellulaire de troisième génération, un codec AMR ("Adaptive Multi Rate") est utilisé. Pour un réseau cellulaire de deuxième génération, un codec EMR ("Enhanced Full Rate Speech") est utilisé. Tandis qu'au sein d'un réseau PSTN/ISDN, on utilise en général un codec compatible avec la norme G711 (composante de la norme radio H320, établie par l' UIT-T, Union Internationale des Télécommunications).

On suppose, dans l'exemple décrit ici, que les utilisateurs des terminaux de télécommunication T1 à T5 souhaitent participer à une conversation téléphonique de groupe, dénommée dans le contexte de l'invention "conférence téléphonique". La mise en relation téléphonique entre les terminaux est effectuée au moyen d'un serveur de conférence MCU, dénommé ici pont d'audioconférence, destiné à recevoir le flux vocal de chacun des terminaux de télécommunication T1 à T5 (ou d'au moins de ces terminaux) et à le retransmettre aux autres terminaux de télécommunication (ou à au moins une partie des autres terminaux). Un utilisateur souhaitant participer à la conférence, établit au moyen de son terminal une liaison de communication avec le pont d'audioconférence MCU pour l'émission et la réception des flux vocaux.

Les canaux de transmission de flux vocaux A1 à A8, liés à une audioconférence établie entre les terminaux T1 à T5, sont représentés sur la figure 1 par des doubles flèches. Ces flux vocaux A1 à A8 sont généralement mixés d'abord réseau par réseau (par exemple au sein du réseau R1 et indépendamment au sein du réseau R2). Les différents flux mixés ainsi obtenus sont ensuite transmis via des passerelles d'interconnexion de réseau vers le pont d'audioconférence MCU raccordé à l'un des réseaux, ici le réseau R2.

Le système représenté à la figure 1 comprend également un dispositif de traitement de données PCC, de type serveur de données, communiquant avec le pont d'audioconférence MCU via le réseau privé R4 et les canaux de transmission de données D6 à D7.

Le serveur de données PCC comprend une interface de communication 150 permettant au serveur d'accéder au réseau privé R4 (canal de transmission de données D6), au réseau Internet R3 (canal de transmission de données D4), et d'envoyer des messages SMS aux terminaux de télécommunication (canal de transmission de données M2).

Le serveur de données PCC peut communiquer avec le terminal T1, d'une part via un canal de transmission de données D1 à D4 représenté en trait continu simple et d'autre part via un canal de transmission de messages M1 (de type SMTP, Simple Mail Transfer Protocol, par exemple), M2 de type SMS représenté en trait discontinu. La transmission de SMS s'effectue pour le terminal T1 soit en mode circuit, soit en mode paquet.

Le serveur de données PCC comprend en outre des moyens de traitement de données 160, de type processeur de calcul, accédant à une base de données 165. Les moyens de traitement de données 160 comprennent eux-mêmes des modules logiciels 161 à 163 qui sont :
- une interface logicielle 163 pour le traitement des données échangées avec le pont d'audioconférence MCU,
- une interface logicielle 161 pour le traitement des données échangées avec les terminaux T1 à T5 pendant une audioconférence,
- un moteur logiciel de traitement de données 162 pour la commande et la coordination entre les interfaces 161 et 163.

La base de données 165 est conçue pour enregistrer sous forme de tables un ensemble de données parmi lesquelles :
- une table des abonnés au service d'information des participants d'audioconférence comprenant, pour chaque identifiant d'abonné, des données d'identification d'abonné (par exemple nom, mot de passe, numéro de téléphone, le type de terminal utilisé, la liste des profils enregistrés par l'utilisateur, etc),
- une table des profils des abonnés comprenant, pour chaque identifiant de profil, les données associées du profil (par exemple nom, prénom, société, fonction dans la société, photographie de l'abonné, etc),
- une table des conférences en cours comprenant, pour chaque identifiant de conférence, la liste des identifiants des participants de cette conférence,
- une table des participants comprenant, pour chaque identifiant de participant, un identifiant d'abonné, un identifiant de profil et un identifiant de conférence.

Ces différentes tables sont destinées à être complétées et mises à jour lors de l'exécution du procédé selon l'invention, ou éventuellement en dehors de cette exécution, par exemple lors de l'inscription des abonnés au service d'identification des participants.

La table des abonnés est complétée au fur et à mesure des inscriptions au service. La table des profils d'abonnés peut être complétée à tout moment, y compris pendant une audioconférence. A chaque abonné peut ainsi être associé un ou plusieurs profils d'abonné. Par exemple un abonné aura d'une part un profil dit "professionnel" indiquant sa société d'appartenance et sa fonction dans la société et d'autre part un profil dit "privé" indiquant son nom, prénom, surnom, adresse personnelle. Dans chaque profil sont enregistrées aussi bien des données alphanumériques que des données multimédia intégrant des images, animées ou fixes, ou des séquences sonores. De préférence une photographie de l'abonné est insérée dans les données du profil.

La table des conférences est complétée et modifiée lors du déroulement des conférences. Il en est de même pour la table des participants. Un participant correspond à un abonné, participant à une conférence donnée avec un profil donné. Un participant se caractérise donc par un identifiant d'abonné, un identifiant de conférence et un identifiant de profil d'abonné.

De retour à la figure 1, le pont d'audioconférence MCU comprend un dispositif 190 de traitement des flux vocaux permettant au pont MCU de traiter (typiquement par mixage) les différents flux vocaux reçus de chacun des terminaux de télécommunication T1, T2, T3 avant de les retransmettre à tout ou partie des terminaux de télécommunication. Ce dispositif est capable de détecter la connexion ou la rupture de connexion d'un terminal. Il comprend également un module de détection de l'activité vocale de la conférence. Cette détection consiste en particulier en une détermination du niveau sonore de chacun des flux vocaux reçus. De tels modules sont connus et usuellement utilisés pour détecter les phases de silence dans la conversation de manière à permettre une réduction de la quantité de données à retransmettre aux différents terminaux, ou pour détecter les flux ayant le niveau sonore le plus élevé afin de ne mixer que ces flux-là. Un tel module est utilisé pour détecter le niveau sonore de chaque flux vocal. Dans le contexte de l'invention, il permet de détecter les prises de parole des participants, notamment de déterminer quel est le flux vocal ayant le niveau sonore le plus élevé. On convient que ce flux correspond au flux du locuteur actif. L'utilisateur présumé du terminal à l'origine de ce flux est ainsi identifié comme étant le locuteur actif. Dans le cas particulier où plusieurs participants d'une conférence parlent simultanément, c'est donc celui qui parle le plus fort qui sera détecté comme étant le locuteur actif.

Le pont d'audioconférence MCU comprend également une interface de communication 170 permettant l'accès au réseau R4 et une interface logicielle 180 pour le traitement des données échangées avec le serveur de données PCC. L'interface logicielle 180 du pont d'audioconférence MCU est complémentaire de l'interface logicielle 163 du serveur de données PCC. Ces interfaces 180 et 163 communiquent entre elles, par exemple par un canal de communication D6-D7 établi au moyen d'une interface de communication de type socket IP (Internet Protocol), interface chaque fois associée à une adresse réseau (une adresse IP en l'occurrence) et à un identifiant de port de communication. Ce type de canal de communication permet l'établissement d'une liaison de communication en mode point à point entre le serveur de données PCC et le pont d'audioconférence MCU. Cette liaison est de préférence dédiée à la mise en oeuvre du service d'information des participants, c'est-à-dire réservée à l'échange, entre le terminal et le serveur PCC, de données permettant cette mise en oeuvre. Le format des données échangées est par exemple le format XML, tout autre format adapté étant également envisageable.

Le pont d'audioconférence MCU et le serveur de données PCC communiquent en mode client/serveur et toute autre variante de liaison de communication compatible avec ce mode de fonctionnement est envisageable. On peut ainsi envisager une communication par messages, par appels de fonctions distantes (RPC, Remote Procédure Call), par middleware, etc. En outre le réseau R4 peut être un réseau privé ou public (Internet), un réseau virtuel, etc.

Le pont d'audioconférence MCU envoie au serveur de données PCC, au moyen de l'interface logicielle 180 et via le canal de communication D6-D7, des informations relatives aux événements suivants, détectés par le dispositif 190 de traitement des flux de conférence et/ou le module de détection d'activité vocale :
- l'arrivée d'un premier participant à une audioconférence, c'est-à-dire le début d'une audioconférence,
- l'arrivée d'un nouveau participant à une audioconférence en cours,
- le départ d'un participant d'une audioconférence,
- un changement de locuteur actif, c'est-à-dire l'identification d'un participant en tant que nouveau locuteur actif,
- la prise de parole d'un participant,
- la demande de parole d'un participant (dans les applications PoC).

Chacun de ces événements est détectable par le pont d'audioconférence MCU à partir des flux de données de conférence. Selon l'application de conférence téléphonique considérée cette détection se fait à partir des flux vocaux, à partir des demandes de parole reçues (cas d'un système de mise en relation téléphonique dans les applications PoC) ou à partir des flux de contrôle de transmission des flux vocaux. Suite à la détection par le pont d'audioconférence MCU d'un de ces événements, le module logiciel 180 déclenche un envoi de données d'identification d'événement. Chaque envoi de données au serveur de données PCC comprend de préférence un code identifiant l'événement détecté, un identifiant du terminal à l'origine de l'événement et un identifiant de la conférence en cours. L'identifiant du terminal est de manière avantageuse son numéro de téléphone. En effet, ceci permet d'une part une identification simple des terminaux et d'autre part l'utilisation de ce numéro de téléphone par le serveur de données PCC pour communiquer avec le terminal en question.

Le terminal de téléphonie T1, dit terminal 3G, comprend des moyens de communication 130 lui permettant d'établir une liaison de communication téléphonique en mode circuit pour la transmission des flux de données de conférence et d'établir un canal de communication de données en mode paquet avec le serveur de données PCC, de manière à permettre la réception simultanée et indépendante de données et de flux vocaux. A titre d'exemple, le terminal T1 peut être un terminal de téléphonie de type 2,5G de classe A ou un terminal de type 3G. De tels terminaux, définis par l'organisme 3GPP (Third Génération Partnership Project, http ://www.3gpp.org), permettent en effet d'ouvrir une session de communication en mode circuit pour la réception et l'émission de flux vocal et simultanément une session de communication en mode paquet pour l'envoi ou la réception de flux de données. Par exemple, un mobile 2,5G de classe A peut accéder simultanément au services GSM en mode circuit et aux services GPRS en mode paquet.

Le terminal de télécommunication T1 comporte en outre un écran d'affichage 100 sous forme par exemple d'écran à cristaux liquides, une mémoire de données 120, par exemple une mémoire de type RAM, un microprocesseur 110 pour le traitements de données et l'exécution de programmes. Dans un mode réalisation préféré, ce microprocesseur est conçu également pour supporter une plate-forme JAVA de type J2ME (Java 2 Micro Edition) permettant l'exécution de programmes de type midlet (applet Java téléchargeable dans un terminal portable muni d'une plate-forme de type J2ME).

Le terminal de télécommunication T1 est de préférence compatible avec les standards suivants :
- MIDP (Mobile Information Device Profile), de manière à pouvoir créer un canal de communication Internet de type "socket IP" (Internet Protocol),
- WMA (Wireless Message API), de manière à pouvoir démarrer une application JAVA au moyen de messages SMS.

De préférence, le terminal de télécommunication T1 comprend une caméra embarquée et est compatible avec le standard MMAPI (Mobile Média Application Programming Interface) de manière à pouvoir prendre et enregistrer une photo de l'utilisateur du terminal, photo qui sera incorporée dans les données d'un profil de cet utilisateur.

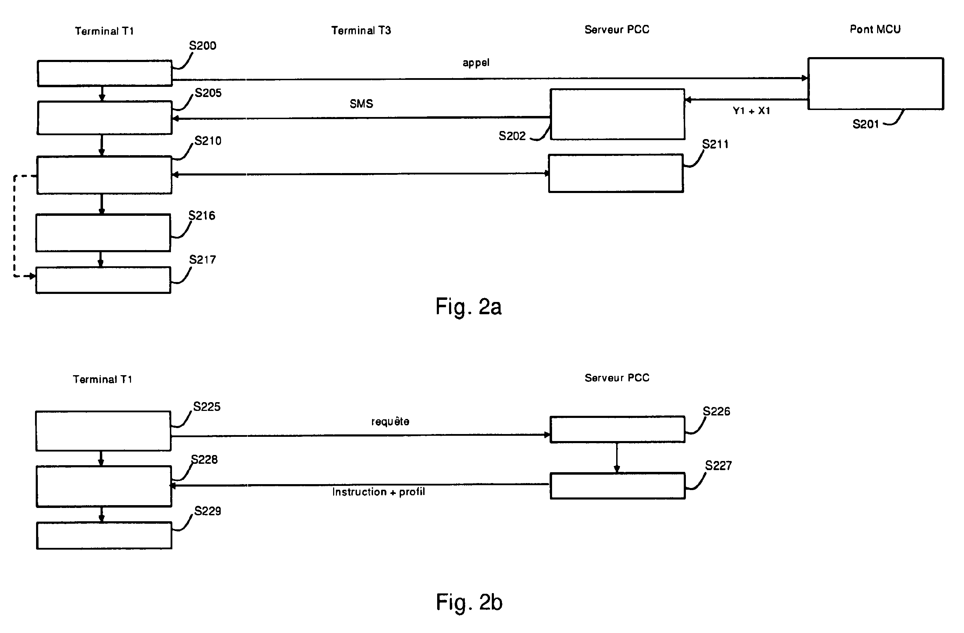

Un exemple de mise en oeuvre du procédé selon l'invention est maintenant décrit par référence aux figures 2a à 2f.

Sur ces figures, on a représenté à la fois les principaux échanges (par des flèches représentant les flux vocaux ou les flux de données) entre les terminaux T1, T3, le serveur de données PCC et le pont d'audioconférence MCU ainsi que les étapes mises en oeuvre dans chacune de ces entités.

Dans l'exemple donné aux figures 2a à 2f on suppose que le terminal T1 est un terminal permettant d'établir une session de communication en mode circuit pour la réception et l'émission de flux vocal et d'établir simultanément une session de communication en mode paquets pour l'envoi ou la réception de flux de données. Le terminal T3 quant à lui ne dispose pas de cette possibilité. On illustre ainsi que l'invention s'applique à un système de conférence dans lequel les terminaux ont différentes capacités de communication. En effet, la mise en oeuvre du procédé selon l'invention ne suppose aucune modification préalable des terminaux, mais s'adapte au contraire aux types de terminaux présents. La mise en place du service d'information selon l'invention ne sera toutefois accessible qu'aux terminaux capables d'établir simultanément une session de communication pour la réception et l'émission de flux vocal et une session de communication pour l'envoi ou la réception de flux de données. La présence d'autres terminaux moins performants ne perturbe aucunement la mise en oeuvre du procédé selon l'invention, la prise en compte du type de terminal étant gérée par le serveur de données PCC.

La première phase du procédé, correspondant à la connexion du premier participant, est décrite par référence à la figure 2a. Cette première phase commence à l'étape S200 au cours de laquelle un utilisateur du terminal T1 établit une liaison de communication avec le pont d'audioconférence MCU, en composant sur ce terminal T1 le numéro de téléphone associé au pont. Cette liaison de communication permet de transmettre les flux de données de conférence entre le terminal et le pont.

Lorsque la communication s'établit avec le pont d'audioconférence MCU, ce dernier détecte à l'étape S201 le début d'une nouvelle conférence. Il envoie alors au serveur de données PCC via le canal de communication IP D6-D7 des données comprenant notamment le numéro de téléphone Y1 du terminal appelant, une identification X1 de l'audioconférence ainsi qu'une donnée codant la nature de l'événement détecté par le pont d'audioconférence MCU. Dans ce cas, l'événement est l'entrée en conférence d'un premier participant. En fonction du numéro de téléphone Y1 transmis, le serveur de données PCC est en mesure de détecter le type du terminal : un numéro de téléphone commençant par le préfixe 06 est indicateur d'un numéro de mobile. En outre, en fonction du numéro de téléphone Y1 transmis et de la table des abonnés au service d'information des participants d'audioconférence, le serveur est en mesure de connaître le type de terminal utilisé, notamment si celui-ci est équipé de moyens lui permettant d'établir un canal de communication IP simultanément avec le canal de transmission des flux vocaux. Dans l'exemple de réalisation décrit ici, le serveur de données PCC détecte donc que le terminal T1 dispose de tels moyens. En variante, une détection automatique du type de terminal est obtenue par interrogation de ce terminal.

A l'étape S202, le serveur de données PCC enregistre dans les tables de la base de données 165 les informations relatives à l'ouverture d'une conférence. Il crée notamment un identifiant pour la conférence en cours et un identifiant pour le nouveau participant et enregistre les données associées décrivant cette conférence et ce participant. Dans l'exemple de la figure 2a, le terminal qui se connecte en premier au pont d'audioconférence MCU est le terminal T1. Le serveur de données PCC envoie au terminal T1 une requête sous forme d'un message de type WAP Push (WAP, Wireless Application Protocol), transmis par l'envoi d'un SMS de format spécifique. Ce message au contenu actif comprend l'URL de chargement du midlet et permet de déclencher à l'ouverture du message le téléchargement d'un midlet via le navigateur WAP du terminal. Une confirmation peut être demandée à l'utilisateur avant chargement. Ce message est transmis via le centre SMS-C C1 au terminal T1. Tout autre format de message permettant de déclencher l'exécution d'un programme sur le terminal destinataire est également utilisable.

A réception à l'étape S205 de ce message, le terminal T1 ouvre une connexion WAP (Wireless Application Protocol) lui permettant d'accéder au réseau Internet via la passerelle G1 et d'établir à l'étape S210 un canal de communication vers le serveur de données PCC. Aux étapes S210 et S211, le serveur de données PCC et le terminal T1 dialoguent pour l'établissement de ce canal. Ce canal est de préférence établi sous forme de canal IP au moyen d'une interface de type socket. Ce type de canal de communication, représenté schématiquement par les flux D1 à D4 sur la figure 1, permet ainsi l'établissement d'une liaison point à point entre le serveur de données PCC et le terminal T1. Le format des données échangées via ce canal est de préférence basé sur le protocole HTTP, mais tout autre format est envisageable. De préférence, le serveur de données PCC signale au terminal T1 le bon établissement du canal.

Le canal IP créé entre le terminal T1 et le serveur de données PCC est de préférence dédié et adapté à la transmission d'instructions de commande et/ou de données entre le serveur de données PCC et le terminal T1. De préférence, ce canal est dédié à l'échange de données, informations et instructions nécessaires à la mise en place du service d'information des participants.

Les instructions de commandes, véhiculées par ce canal en provenance du serveur de données PCC à destination du terminal T1, sont par exemple :
- une demande d'enregistrement dans le terminal T1 d'un jeu d'informations; par exemple une demande d'enregistrement d'un ou plusieurs profils, le serveur envoyant un identifiant du profil et les données associées à ce profil;
- une demande d'affichage d'informations; par exemple une demande d'affichage d'un ou plusieurs profils, le serveur envoyant les identifiants du profil et les données associées à ces profils.

En variante, lorsque les informations à afficher ont été préalablement enregistrées dans le terminal T1 en association avec un identifiant, le serveur envoie en guise de demande d'affichage uniquement un identifiant du jeu d'informations à afficher. Ceci permet un gain important en terme de délai de traitement et de quantité de données à transmettre. Par exemple, seul un identifiant des profils à afficher ou un simple identifiant de participant est envoyé au terminal pour provoquer l'affichage du profil associé à ce ou ces identifiants. Cette variante peut être proposée par le midlet à l'utilisateur sous forme d'option ou être imposée par le serveur de données.

Selon une autre variante, l'instruction de commande d'affichage, est accompagnée d'un texte descriptif de l'événement associé à l'affichage, du type "X a rejoint la conférence", "X a quitté la conférence", "X a pris la parole", etc, où X est le nom du participant dont l'identifiant a été transmis.

Les instructions de commandes, véhiculées par le canal IP en provenance du terminal T1 à destination du serveur de données PCC, sont par exemple :
- une demande de création d'un profil, le terminal envoyant les données associées au profil, le serveur renvoyant en retour l'identifiant du profil créé;
- une demande de suppression d'un profil, le terminal envoyant l'identifiant du profil concerné;
- une demande de modification d'un profil, parmi une liste de profils donnés, le terminal envoyant l'identifiant du profil concerné, et les nouvelles données à associer au profil modifié, qui remplace les données précédemment enregistrées;
- une demande de sélection d'un profil pour participer à la conférence, parmi une liste de profils donnés, le terminal envoyant l'identifiant du profil concerné;
- une demande de sélection d'un format donné parmi un ensemble de formats possibles pour l'envoi des informations sur les événements.

L'échange de données entre le terminal T1 et le serveur de données PCC peut inclure également des accusés de réception des instructions, des données ou requêtes dédiées à la maintenance du canal de communication, dédiées par exemple à la vérification de l'identité du terminal, la synchronisation des messages, le signalement d'erreurs, l'initialisation ou la fin de la communication, etc. Toutes ces données et informations sont nécessaires à la mise en oeuvre du service d'information des participants.

De retour à la figure 2a, lorsque le canal IP a été établi, le serveur de données PCC met à jour la table des abonnés dans la base de données 165. En cas d'échec d'établissement de la connexion, un code significatif de cet échec est enregistré dans les données d'abonné. En cas de succès un autre code est enregistré par le serveur de données PCC. Les codes de succès ou d'échec enregistrés permettent au serveur de données PCC de savoir notamment si le terminal T1 de l'abonné concerné a déjà téléchargé le midlet. En effet, si à l'étape S202 le serveur de données PCC constatait à partir des données qu'il a enregistré que le terminal T1 a déjà téléchargé le midlet, il est prévu que le SMS envoyé par le serveur de données PCC déclenche à sa réception par le terminal T1, non pas le téléchargement du midlet, mais simplement le lancement du midlet. Dans ce cas, l'étape S216 n'est pas exécutée par le terminal T1 et celui-ci passe directement de l'étape S21 0 à l'étape S217.

A l'étape S216, le midlet est chargé à partir du serveur de données PCC via le canal IP créé, puis installé dans le terminal T1. Le midlet est de préférence personnalisé de manière à contenir l'information du numéro de téléphone du terminal T1 pour permettre une identification de ce terminal. Le midlet est ensuite démarré à l'étape S217. De préférence le midlet est conçu pour démarrer automatiquement sans nécessiter d'intervention de l'utilisateur du terminal T1.

L'installation du midlet, son démarrage et l'établissement du canal de transmission de données sont donc entièrement automatisés et peuvent le cas échéant être rendus entièrement transparents pour l'utilisateur du terminal. Celui-ci n'a donc aucune manipulation à faire en dehors d'un éventuel paramétrage initial du service et de la création de profils correspondant aux données qu'il souhaite voir transmettre aux autres participants pendant la conférence. La configuration du terminal est donc entièrement automatique.

La deuxième phase du procédé, correspondant à une création de profil, est décrite à la figure 2b. Lorsque le canal de communication est établi, le procédé se poursuit à l'étape S225 par une demande de création de profil qui est envoyée via le canal de communication D1-D4 du terminal T1 au serveur de données PCC. Dans cette demande de création de profil, l'utilisateur envoie les données associées au profil : nom, prénom, informations, photographie, etc. Suite à la réception à l'étape S226 de la demande de création de profil, le serveur de données PCC crée un nouveau profil, enregistre les données du profil dans la table des profils et affecte au profil un identifiant. Puis, à l'étape S227, il envoie l'identifiant du profil au terminal T1, et simultanément une instruction d'affichage.

Suite à la réception à l'étape S228 de l'identifiant, le terminal T1 enregistre l'identifiant du profil de manière à pouvoir retrouver les données associées à partir de ce seul identifiant de profil. Ceci se fait par exemple au moyen d'une table de profil semblable à celle maintenue par le serveur de données PCC dans la base de données 165.

L'instruction d'affichage reçue à l'étape S228 est traitée par le midlet qui va commander à l'étape S229 l'affichage du terminal en fonction des paramètres de cette instruction. L'affichage consiste dans cette situation en l'affichage des données du profil sur le terminal T1, de préférence avec la photographie du participant. En variante un message peut être affiché simultanément aux données du profil pour signaler que la personne dont le profil vient d'être affiché a rejoint l'audioconférence.

En variante, les étapes S225 à S229 sont exécutées pendant le déroulement de la conférence, par exemple à l'initiative de l'utilisateur du terminal T1. Celui-ci sélectionne pour ce faire une option dans un menu proposé par le midlet en cours d'exécution.

Selon une autre variante la création de profil des étapes S225 à S229 peut s'effectuer hors ligne, par exemple lors de l'inscription d'un utilisateur au service d'information de participant, par exemple via un portail Web servant à l'inscription et l'administration du service. Dans toutes les variantes, les différents profils créés par un utilisateur sont enregistrés par le serveur de données PCC dans la base de données 165.

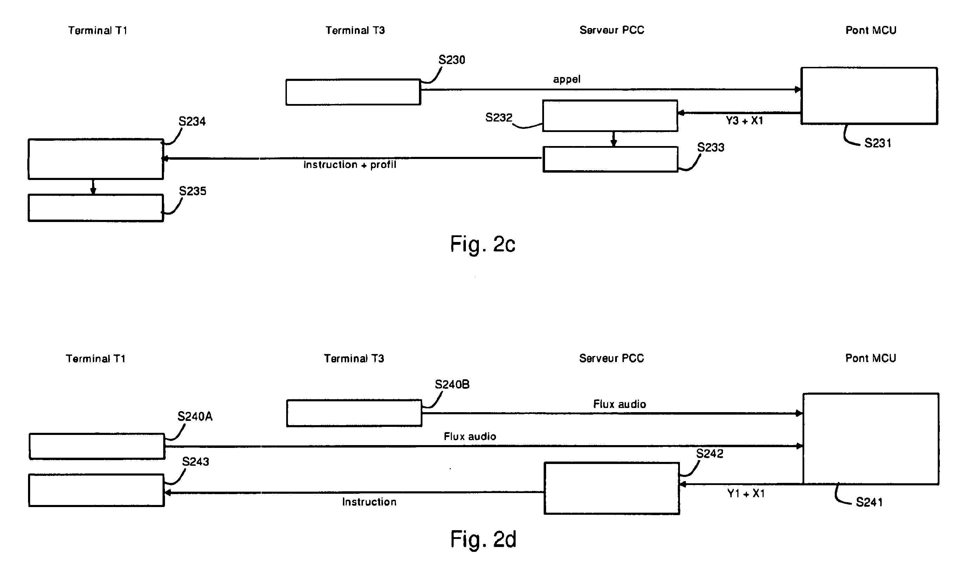

La troisième phase du procédé, correspondant à l'arrivée d'un nouveau participant, est décrite par référence à la figure 2c. A l'étape S230, l'utilisateur du terminal fixe T3 compose le numéro du pont d'audioconférence. Le pont d'audioconférence MCU, recevant cet appel, détecte à l'étape S231 la connexion d'un nouveau participant et envoie au serveur de données PCC via le canal de communication IP D6, D7 des données comprenant notamment le numéro de téléphone Y3 du terminal appelant, une identification X1 de l'audioconférence ainsi qu'une donnée codant la nature de l'événement détecté par le pont d'audioconférence MCU, l'événement étant ici l'arrivée d'un nouveau participant à une conférence en cours.

Le serveur de données PCC analyse à l'étape S232 les données reçues et enregistre un identifiant de profil de participant pour l'audioconférence X1. En fonction du numéro de téléphone Y3 transmis et des données d'abonnés associées, le serveur de données PCC est en mesure de détecter que le terminal associé au numéro Y3 est un terminal ne possédant pas les moyens pour établir, un canal de communication IP avec le serveur de données PCC.

Le serveur de données PCC gère en fait deux catégories de terminaux:
- les terminaux de la catégorie A, permettant d'établir un canal de transmission de données qui est indépendant du canal de transmission de flux vocal et qui permet la réception par le terminal considéré d'un flux de données simultanément au flux vocal reçu,
- les terminaux de la catégorie B ne le permettant pas.

Cette indépendance se traduit en particulier par le fait que le mode d'acheminement du flux de données pour l'information des participants transitant par le canal IP est indépendant du mode d'acheminement des flux vocaux. Il en résulte qu'il n'y a pas de contrainte - par exemple pas de contrainte de type synchronisation temporelle - entre ces deux sortes de flux. Cette indépendance se traduit aussi par le fait que ces deux sortes de flux peuvent d'utiliser un type de liaison différent, un réseau ou un type de réseau différent. Par exemple, lorsque le terminal T1 établit une liaison de communication en mode circuit pour la transmission des flux vocaux, le canal IP entre le terminal T1 et le serveur de données PCC peut être lui créé par une liaison en mode paquet. Le traitement effectué par un terminal sur les flux vocaux qu'il reçoit est également indépendant du traitement effectué par ce même terminal sur les flux de données d'information qu'il reçoit.

Une sorte de coordination, entre d'une part le contenu des flux vocaux reçus par le serveur de conférence et d'autre part le contenu des flux d'information fournis aux terminaux, est réalisée grâce au serveur de données PCC à partir de événements détectés, signalés par le pont d'audioconférence MCU. Cette coordination est apportée par la mise en oeuvre des étapes consistant à déterminer des événements prédéfinis à partir des flux de données de conférence, puis à générer, pour chaque événement déterminé, des informations sur cet événement, ces informations étant ensuite envoyées par le serveur de données vers les terminaux ayant établi une liaison de transmission de données.

D'autres terminaux, par exemple T2 ou T4, T5 peuvent se connecter à la conférence de la même manière que le terminal T3. Le terminal T2 est ici dans la catégorie B comme le terminal T3 tandis que les terminaux T4 et T5 sont dans la catégorie A comme le terminal T1, avec la différence toutefois que les flux vocaux associés au terminal T4 sont transmis en mode paquet (en mode VoIP) tandis que pour le terminal T1 ou T5, ils sont transmis en mode circuit. Pour les terminaux T1, T4 et T5, le canal de transmission de données est quant à lui établi chaque fois en mode paquet.

La suite de la description se limite par souci de simplification à une audioconférence entre un terminal T1 de catégorie A et un terminal T3 de catégorie B. L'invention est cependant applicable à un nombre quelconque de terminaux, et ce, quelle que soit la catégorie de ces terminaux. Bien entendu, seuls les terminaux de catégorie A auront accès au service d'information des participants selon l'invention. De surcroît l'invention s'adapte automatiquement aux types de terminaux participants à l'audioconférence sans pénaliser les terminaux les plus performants.

De retour à la figure 2c, le serveur de données PCC génère à l'étape S233 une instruction de commande destinée au terminal T1. Cette instruction de commande comprend les données du profil du participant Y3, un identifiant de profil associé, et une instruction de demande d'affichage. Le profil est ici un profil par défaut, créé hors ligne, et comprend par exemple uniquement un nom et prénom. Cette instruction est transmise via le canal de communication IP D1-D4 au terminal T1. A réception de cette instruction, le midlet du terminal T1 enregistre à l'étape S234 les données du profil, puis commande l'affichage des données du profil à l'étape S235.

Lors de l'affichage de ce profil, un message peut être affiché simultanément aux données du profil pour signaler que la personne dont le profil vient d'être affiché a rejoint l'audioconférence. Dans cette variante de réalisation, lorsque plusieurs participants ont rejoint l'audioconférence, si le nombre de participant et la résolution de l'écran le permettent, il est possible d'afficher simultanément tous les profils des participants de l'audioconférence et de signaler par couleur, mise en relief, clignotement, etc, le profil concerné par le message qui est affiché.

La quatrième phase du procédé, correspondant au déroulement de l'audioconférence, est décrite par référence à la figure 2d. Lors de l'audioconférence, le pont d'audioconférence MCU est en mesure de détecter l'activité vocale de la conférence à partir de flux vocaux qu'il reçoit. Ainsi les flux vocaux émis par le locuteur Y1 du terminal T1 (étape S240A) et le locuteur Y3 du terminal T3 (étape S240B) sont envoyés au pont d'audioconférence MCU. A l'étape S241, le pont d'audioconférence MCU mixe le ou les flux qu'il reçoit, pour les retransmettre aux autres terminaux.

Le pont procède en outre à la détermination de l'activité vocale de conférence. Il procède en particulier à la détection du locuteur actif à partir des flux vocaux reçus, le participant identifié comme étant le locuteur actif étant l'utilisateur présumé du terminal pour lequel le flux vocal émis présente le niveau sonore le plus élevé. Lorsque qu'un nouveau locuteur actif (qui dans l'exemple de la figure 2d est l'utilisateur Y1 du terminal T1) est détecté, le pont d'audioconférence MCU envoie des données d'identification d'événement au serveur de données PCC pour signaler ce changement de locuteur ou ce nouveau locuteur. Ces données d'identification d'événement comprennent notamment un identifiant X1 de l'audioconférence en cours et du terminal Y1 à l'origine du flux identifié comme étant celui du locuteur actif. A réception à l'étape S242 de ces données d'identification d'événement, le serveur de données PCC envoie, à tous les abonnés au service d'information ayant établi un canal de communication IP (aux terminaux de catégorie A), des informations d'événement comprenant par exemple l'identifiant du profil du locuteur actif. Ces informations d'événement sont de préférence envoyées sous forme d'instruction de commande.

A réception à l'étape S243 de cette instruction de commande, le midlet du terminal T1 affiche le profil correspondant à l'identifiant reçu, et optionnellement, un message associé indiquant que le participant concerné a pris la parole. Il en est de même pour les autres terminaux de catégorie A participant éventuellement à la conférence.

Lors de l'audioconférence, les étapes S240 à S243 sont répétées de manière cyclique, le pont d'audioconférence MCU détectant les événements liés au déroulement de l'audioconférence (l'entrée en conférence d'un participant, la sortie de conférence d'un participant, l'identification d'un participant comme nouveau locuteur actif, une prise de parole d'un participant, une demande de parole d'un participant, etc) et générant des données d'identification d'événement, le serveur de données PCC traitant ces données d'identification d'événement pour générer des informations sur les événements détectés et envoyer ces dernières, par exemple sous forme d'instruction de commande, aux terminaux ayant établi un canal de communication IP, les terminaux restituant des informations destinées à être affichées à partir des informations transmises par le serveur PCC.

A partir des données d'identification du terminal impliqué dans l'événement et à partir des tables de données dont il dispose, le serveur de données PCC est en mesure de restituer des informations sur l'identité de l'utilisateur présumé du ou des terminaux à l'origine de l'événement détecté, et donc de transmettre des informations sur les événements comprenant une information sur le ou les participants concernés par l'événement détecté.

De manière générale, le serveur de données PCC envoie au terminal T1, pour chaque événement détecté et signalé par le pont d'audioconférence MCU, des informations caractéristiques de l'événement détecté, par exemple l'identifiant du participant concerné par l'événement, l'identifiant du profil du participant concerné par l'événement, un message descriptif de l'événement, des données de description de l'événement, etc.

Les informations affichées suite à la réception de ces informations sont, soit comprises dans les informations transmises (cas où le profil est transmis dans les données), soit restituées au moyen des informations transmises (par exemple sous forme d'identifiants) à partir d'informations préenregistrées sur le terminal. Dans cette deuxième option, la quantité d'information transmise est ainsi très faible, ce qui permet de réduire au minimum la durée des échanges de données et traitements nécessaires pour provoquer l'affichage des informations. L'affichage suit donc les événements (prise de parole, etc) en quasi-temps réel.

En variante d'un signalement par affichage, il est possible de fournir un signalement par émission d'un signal sonore ou vocal, par déclenchement d'une vibration, par envoi de message, etc. Toute autre forme appropriée de signalement est envisageable.

Les informations relatives à l'événement détecté sont ainsi mises à disposition de l'utilisateur du terminal par affichage ou par tout autre moyen. Ceci permet d'informer l'utilisateur sur des événements qu'il n'est pas en mesure de détecter aisément par lui-même ou qu'il n'est pas en mesure de détecter de manière non ambiguë.

En variante, au lieu de signaler chaque prise de parole, on signale une prise de parole donnée seulement si elle a une durée minimale. Une durée minimale de temporisation, correspondant à la durée minimale de prise de parole en dessous de laquelle la prise de parole n'est pas signalée aux terminaux, est ainsi définie. Cette durée est par exemple comprise entre 1 et 3 secondes. Elle doit être suffisamment faible pour ne pas provoquer de décalage temporel trop important entre la prise de parole d'un participant et le moment où un terminal affiche effectivement l'information associée à la prise de parole. Elle doit être suffisamment élevée pour éviter des instructions de commande d'affichage trop rapprochées et donc une instabilité de l'affichage du terminal et un inconfort pour les participants.

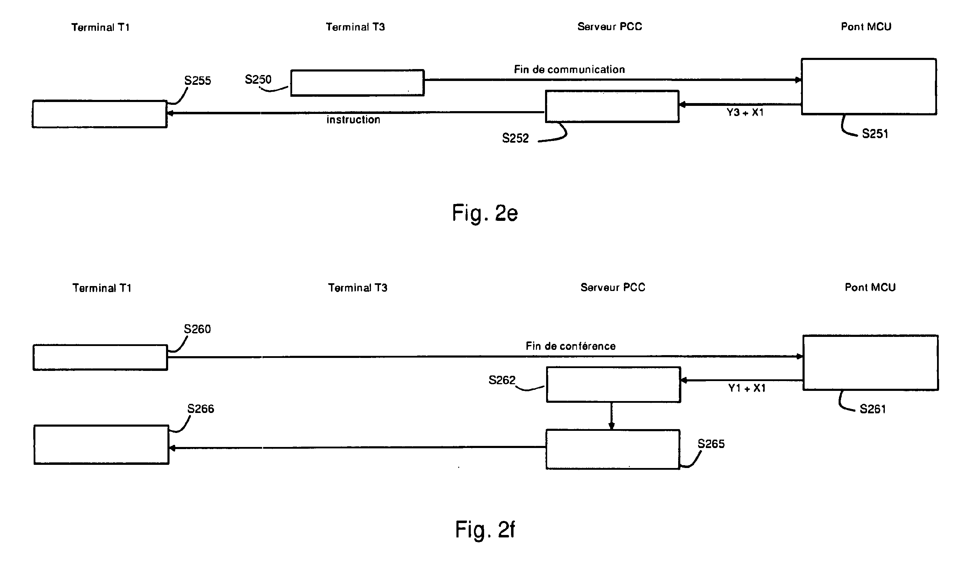

La cinquième phase du procédé, correspondant au départ d'un participant, est décrite par référence à la figure 2e. Lorsque à l'étape S250 un participant (ici l'utilisateur du terminal T3) quitte l'audioconférence en fermant la liaison de communication, le pont d'audioconférence MCU le détecte à l'étape S251 et envoie au serveur de données PCC via le canal de communication IP D6, D7 des données comprenant notamment le numéro de téléphone Y3 du terminal quittant la conférence, une identification X1 de l'audioconférence ainsi qu'une donnée codant la nature de l'événement détecté par le pont d'audioconférence MCU, ici le départ d'un participant.

A réception à l'étape S252 des données, le serveur de données PCC enregistre l'information dans la base de données par suppression du profil du participant, puis envoie aux terminaux de catégorie A qui sont encore en liaison de communication avec le pont une instruction de commande comprenant l'identifiant du profil du participant ayant quitté la conférence ainsi qu'un code d'instruction associé.

A réception à l'étape S255 de cette instruction, le midlet du terminal T1 traite cette instruction et commande les moyens d'affichage 100 pour signaler le départ du participant du terminal T1. Ce signalement consiste par exemple à faire clignoter le profil du participant sur le terminal et à afficher simultanément un message indiquant le départ du participant associé.

La sixième phase du procédé, correspondant à la fin de la conférence, est décrite par référence à la figure 2f. Lorsque à l'étape S260 le dernier participant (ici l'utilisateur du terminal T1) quitte l'audioconférence, le pont d'audioconférence MCU le détecte à l'étape S261 et envoi serveur de données PCC via le canal de communication IP D6, D7 des données comprenant notamment une identification X1 de l'audioconférence ainsi qu'une donnée codant la nature de l'événement détecté par le pont d'audioconférence MCU, ici le départ du dernier participant.

A réception à l'étape S262 des données, le serveur de données PCC enregistre l'information dans la base de données par suppression du profil du participant.

A l'étape S265, le dernier participant ayant quitté la conférence, le serveur de données PCC procède à la fermeture du canal de communication établi avec le terminal T1. A l'étape S266, le terminal T1 ferme également le canal de son côté et le midlet du terminal T1 se termine.

Le scénario qui vient d'être décrit par référence aux figures 2a à 2f correspond à un exemple simplifié où deux terminaux T1 et T3 sont en audioconférence. Il est généralisable à un nombre quelconque de terminaux. Chacun des terminaux est soit dans le cas du terminal T1, soit dans le cas du terminal T3 selon qu'il est possible ou non pour ce terminal d'établir un canal de transmission de données indépendant du canal de transmission de flux vocal pour le terminal. Pour chaque terminal pour lequel cela est possible, le serveur de données PCC fait établir une liaison de transmission de donnée, sous forme par exemple de canal de communication IP, pour la transmission des instructions de commande d'affichage. Pour les autres terminaux, la conférence se déroule de manière transparente, sans toutefois permettre à leur utilisateur un accès au service d'information dynamique selon l'invention. Le pont d'audioconférence MCU quant à lui détecte, quels que soient les terminaux présents, les événements associés à l'audioconférence (arrivée ou départ d'un participant, nouveau locuteur actif) et transmet les données d'identification de ces événements au serveur de données PCC qui les traite afin d'envoyer les informations sur ces événements aux terminaux concernés.

Les exemples de réalisation décrits concernent notamment la mise en oeuvre d'un service d'information sur les prises de parole des participants d'une audioconférence. L'invention toutefois se généralise à la mise en oeuvre d'un service d'information sur le déroulement d'une conférence téléphonique, notamment d'informations sur tout événement détectable par le serveur de conférence : durée de prise de parole de chaque participant, volume sonore détecté, durée de connexion de chaque participant, etc. Dans le contexte général de mise en oeuvre de l'invention, la nature des événements détectés et des informations susceptibles d'êtres transmises aux participants d'une conférence téléphonique via la mise en place d'un canal de transmission dédié au service d'information n'est pas restreinte. Un tel canal peut être utilisé utilement pour la transmission en temps réel de tout type d'information.

Des variantes de réalisation sont possibles concernant le protocole d'échange de données entre le serveur de données PCC et le terminal T1 ou entre le serveur de données PCC et le pont d'audioconférence MCU. En particulier des messages supplémentaires peuvent être prévus pour garantir la fiabilité ou la sécurisation des échanges de données ainsi réalisés.

En variante du système représenté à la figure 1, le serveur de données PCC et le pont d'audioconférence MCU peuvent être réalisés sous la forme d'un dispositif de traitement de données unique intégrant les moyens et fonctionnalités du serveur et du pont. Ceci supprime le besoin d'établissement du canal de communication D6-D7. La solution présentée à la figure 1 a toutefois l'avantage de pouvoir facilement être mise en place sur les systèmes d'audioconférence actuels, par ajout d'un serveur de données PCC et mise en place des interfaces de communication entre le serveur de données PCC et le pont d'audioconférence MCU.

Le système qui a été présenté permet de mettre en place une solution générique de synchronisation entre le contenu de deux flux indépendants, dont l'un est transmis en mode circuit et l'autre en mode paquet. Ce principe est utilisé dans le contexte de la mise en oeuvre d'un service d'information sur le locuteur lors d'une audioconférence, dans lequel les flux vocaux reçus au niveau du pont sont utilisés pour générer un ou plusieurs flux de données transmis indépendamment des flux vocaux.

Le principe est de surcroît applicable également au cas où un terminal (par exemple terminal T4, de type ordinateur personnel) accéderait à l'audioconférence via la technique VoIP, par mise en place d'un canal de communication IP dédié à la transmission de instructions de commande d'affichage qui serait indépendant des canaux IP de transmissions des flux de données de conférence. Ces flux comprennent dans ce cas à la fois des flux vocaux (par exemple via RTP) et des flux de données de contrôle des flux vocaux (par exemple via RTCP). Pour un tel terminal, l'établissement du canal de communication sera de préférence déclenché manuellement par l'utilisateur, par exemple par lancement manuel d'un programme adapté, le déclenchement par SMS d'un programme ne fonctionnant en général pas pour ce type de terminal, pour des raisons de sécurisation de l'accès à ce terminal.

Le principe est de plus adaptable à des systèmes de conversation téléphonique de groupe de type Push To Talk. Dans ces systèmes, la détection du locuteur actif peut être réalisée soit à partir des demandes de parole émises par les terminaux via un flux de données de conférence, soit directement à partir des flux vocaux de conférence reçus par le serveur de mise en relation téléphonique.

Le principe de fonctionnement de l'invention est donc applicable à tout système considéré de conversation téléphonique de groupe, quel que soit le type de terminal présent, quels que soient les réseaux d'acheminement des flux vocaux. Il la mise en place d'un type unique de serveur de données, quels que soient les serveurs de conférence existant.

## Revendications

1. Procédé pour informer les participants à une conférence téléphonique sur le déroulement de ladite conférence, ladite conférence étant mise en oeuvre au moyen d'une pluralité de terminaux (T1, T2, T3) accédant à un réseau de télécommunication (R1, R2, R3), une liaison de communication (A1, A4, A5, A6) étant établie entre chaque terminal et un serveur de conférence (MCU) pour la transmission d'au moins un flux de données de conférence, le procédé étant **caractérisé en ce qu'**il comporte les étapes suivantes au cours desquelles :
- une liaison (D1, D2, D3, D4) de transmission de données est établie (S210, S211) entre au moins un des terminaux (T1) et un serveur de données (PCC) accédant audit réseau de télécommunication, ladite liaison de transmission de données étant indépendante de la liaison de communication établie pour le terminal considéré ;
- le serveur de conférence analyse (S201, S231, S241, S251, S261) les flux de données de conférence reçus en provenance des terminaux au cours de la conférence, détecte une occurrence d'au moins un événement prédéfini relatif au déroulement de la conférence, génère des données d'identification d'événement comprenant au moins une identification d'un terminal pour chaque événement dont une occurrence est détectée, et transfère lesdites données d'identification au serveur de données ;
- le serveur de données analyse (S202, S232, S242, S252, S262) lesdites données d'identification reçues pour générer des informations relatives à l'identité du ou des participants impliqués dans l'événement considéré, et transmet lesdites informations, via au moins une dite liaison de transmission de données, à destination d'au moins un desdits terminaux pour lequel une liaison de transmission de données a été établie.

2. Procédé selon la revendication 1, **caractérisé en ce que**, pour un terminal donné, ladite liaison de transmission de données est établie suite à la détection par le serveur de conférence de l'établissement de la liaison de communication avec le terminal considéré.

3. Procédé selon la revendication 1 ou 2, **caractérisé en ce que**, ladite liaison de transmission de données établie pour un terminal donné est adaptée à la réception par le terminal considéré d'un flux de données simultanément à la réception dudit au moins un flux de données de conférence.

4. Procédé selon l'une quelconque des revendications 1 à 3, **caractérisé en ce que** chaque terminal destinataire desdites informations d'événement traite ces informations pour générer et afficher sur un écran (100) équipant ledit terminal des informations relatives à l'événement considéré.

5. Procédé selon la revendication 4, **caractérisé en ce que** les informations affichées sur l'écran de chaque terminal destinataire comprennent des informations sur l'identité du ou des utilisateurs présumés du ou des terminaux impliqués dans ledit événement considéré.

6. Procédé selon l'une quelconque des revendications 1 à 5, **caractérisé en ce que** ledit au moins un événement prédéfini appartient au groupe d'événements comprenant : "entrée en conférence d'un participant", "sortie de conférence d'un participant", "identification d'un participant comme nouveau locuteur actif", "prise de parole d'un participant", "demande de parole d'un participant".

7. Procédé selon la revendication 6, **caractérisé en ce que** l'identification d'un participant comme nouveau locuteur actif est obtenue par analyse d'activité vocale des flux vocaux compris dans les flux de données de conférence, le participant identifié comme étant le locuteur actif étant l'utilisateur présumé du terminal dont le flux vocal présente le niveau sonore le plus élevé.

8. Procédé selon l'une quelconque des revendications 1 à 7, **caractérisé en ce que**, pour au moins un des terminaux pour lequel une liaison de transmission de données est établie, cette liaison de transmission de données est établie en mode paquet, tandis que la liaison de communication est établie en mode circuit.

9. Procédé selon l'une quelconque des revendications 1 à 8, **caractérisé en ce que** ledit serveur de données est un module spécifique inclus dans ledit serveur de conférence.

10. Procédé selon l'une quelconque des revendications 1 à 9, **caractérisé en ce que** ledit serveur de données envoie un message à destination d'au moins un desdits terminaux pour lequel une liaison de transmission de données a été établie afin de déclencher l'établissement de la liaison de transmission de données pour le terminal considéré et la transmission au cours de la conférence desdites informations d'événements via ladite liaison de transmission de données établie.

11. Procédé selon l'une quelconque des revendications 1 à 10, **caractérisé en ce que** lorsqu'un terminal considéré parmi ladite pluralité de terminaux est un terminal (T1) de téléphonie mobile, le serveur de données envoie audit terminal de téléphonie mobile considéré, suite à l'établissement pour ce terminal de ladite liaison de communication, un message de type message court pour déclencher l'établissement de ladite liaison de transmission de données pour ledit terminal considéré ainsi que le lancement dans ledit terminal considéré d'un logiciel pour exécuter les opérations consistant à :
- recevoir lesdites informations d'événement via ladite liaison de transmission de données,
- traiter lesdites informations d'événement reçues pour générer des informations à afficher, et
- commander l'affichage par un écran équipant le terminal considéré desdites informations à afficher.

12. Serveur de données (PCC), utilisé pour la mise en oeuvre d'un procédé pour informer les participants à une conférence téléphonique sur le déroulement de ladite conférence, ladite conférence étant établie entre une pluralité de terminaux (T1, T2, T3) accédant à un réseau de télécommunication (R1, R2, R3),
ledit serveur de données étant destiné à coopérer avec un serveur de conférence (MCU) ayant établi une liaison de communication avec chacun desdits terminaux pour la transmission d'au moins un flux de données de conférence, ledit serveur de données comprenant :
- des moyens (150) pour établir une liaison (D1, D2, D3, D4) de transmission de données avec au moins un des terminaux (T1), ladite liaison de transmission de données étant indépendante de la liaison de communication établie entre le terminal considéré et le serveur de conférence;
- des moyens (163, 150) pour recevoir dudit serveur de conférence, suite à une détection d'une occurrence d'un événement relatif au déroulement de la conférence, des données d'identification d'événement comprenant au moins une identification d'un terminal concerné par cet événement;
- des moyens (162) pour générer des informations relatives à l'identité du ou des participants impliqués dans l'évènement considéré par analyse desdites données d'identification d'événement; et
- des moyens (161, 150) pour transmettre lesdites informations, via au moins une dite liaison de transmission de données, à destination d'au moins un desdits terminaux (T1) pour lequel une liaison de transmission de données a été établie.

13. Serveur de données selon la revendication 12, **caractérisé en ce que** ledit serveur de données comprend des moyens (161, 150) pour envoyer un message à destination d'au moins un desdits terminaux pour lequel une liaison de transmission de données a été établie afin de déclencher l'établissement de la liaison de transmission de données pour le terminal considéré et la transmission au cours de la conférence desdites informations d'événements via ladite liaison de transmission de données établie.

14. Système comprenant
- un serveur de données selon la revendication 12 ou 13,
- un serveur de conférence (MCU) utilisé pour la mise en oeuvre d'un procédé pour informer les participants à une conférence téléphonique sur le déroulement de ladite conférence, ladite conférence étant établie entre une pluralité de terminaux (T1, T2, T3) accédant à un réseau de télécommunication (R1, R2, R3),
ledit serveur de conférence comprenant :
- des moyens (190) pour analyser les flux de données de conférence reçus en provenance des terminaux (T1, T2, T3) au cours de la conférence, et détecter une occurrence d'au moins un événement prédéfini relatif au déroulement de la conférence ;
- des moyens (180) pour générer des données d'identification d'événement pour chaque événement dont une occurrence est détectée; et
- des moyens (170) pour transférer lesdites données d'identification audit serveur de données.

## Claims

1. Method for supplying information to the participants in a telephone conference about the conduct of said conference, said conference being implemented by means of a plurality of terminals (T1, T2, T3) accessing a telecommunication network (R1, R2, R3), a communication link (A1, A4, A5, A6) being established between each terminal and a conference server (MCU) for the transmission of at least one conference data stream, the method being **characterized in that** it comprises the following steps in the course of which:
- a data transmission link (D1, D2, D3, D4) is established (S210, S211) between at least one of the terminals (T1) and a data server (PCC) accessing said telecommunication network, said data transmission link being independent of the communication link established for the terminal considered;
- the conference server (S201, S231, S241, S251, S261) analyzes the conference data streams received from the terminals in the course of the conference, detects an occurrence of at least one predefined event relating to the conduct of the conference, generates event identification data comprising at least one identification of a terminal for each event of which an occurrence is detected, and transfers said identification data to the data server;
- the data server (S202, S232, S242, S252, S262) analyzes said identification data received in order to generate information relating to the identity of the participant(s) involved in the event considered, and transmits said information, via at least one said data transmission link, towards at least one of said terminals for which a data transmission link has been established.

2. Method according to Claim 1, **characterized in that**, for a given terminal, said data transmission link is established following the detection by the conference server of the establishment of the communication link with the terminal considered.

3. Method according to Claim 1 or 2, **characterized in that** said data transmission link established for a given terminal is suited to the receipt by the terminal considered of a data stream simultaneously with the receipt of said at least one conference data stream.

4. Method according to any one of Claims 1 to 3, **characterized in that** each recipient terminal of said event information processes this information so as to generate and display on a screen (100) fitted to said terminal information relating to the event considered.

5. Method according to Claim 4, **characterized in that** the information displayed on the screen of each recipient terminal comprises information about the identity of the presumed user or users of the terminal or terminals involved in said event considered.

6. Method according to any one of Claims 1 to 5, **characterized in that** said at least one predefined event belongs to the group of events comprising: "a participant enters the conference", "a participant exits the conference", "identification of a participant as new active speaker", "a participant's turn to speak", "a participant asks to speak".

7. Method according to Claim 6, **characterized in that** the identification of a participant as new active speaker is obtained by voice activity analysis of the voice streams included in the conference data streams, the participant identified as being the active speaker being the presumed user of the terminal whose voice stream exhibits the highest sound level.

8. Method according to any one of Claims 1 to 7, **characterized in that**, for at least one of the terminals for which a data transmission link is established, this data transmission link is established in packet mode, while the communication link is established in circuit mode.

9. Method according to any one of Claims 1 to 8, **characterized in that** said data server is a specific module included in said conference server.

10. Method according to any one of Claims 1 to 9, **characterized in that** said data server dispatches a message towards at least one of said terminals for which a data transmission link has been established so as to trigger the establishment of the data transmission link for the terminal considered and the transmission in the course of the conference of said event information via said established data transmission link.

11. Method according to any one of Claims 1 to 10, **characterized in that** when a terminal considered from among said plurality of terminals is a mobile telephone terminal (T1), the data server dispatches to said mobile telephone terminal considered, following the establishment for this terminal of said communication link, a message of short message type so as to trigger the establishment of said data transmission link for said terminal considered as well as the running in said terminal considered of a piece of software for executing the operations consisting in:
- receiving said event information via said data transmission link,
- processing said event information received so as to generate information to be displayed, and
- controlling the display by a screen fitted to the terminal considered of said information to be displayed.

12. Data server (PCC) used for the implementation of a method to inform the participants to a telephone conference as to the progress of said conference, said conference being established between a plurality of terminals (T1, T2, T3) accessing a telecommunication network (R1, R2, R3),
said data server being intended to cooperate with a conference server (MCU) that has established a communication link with each of said terminals for the transmission of at least one conference data stream, said data server comprising:
- means (150) for establishing a data transmission link (D1, D2, D3, D4) with at least one of the terminals (T1), said data transmission link being independent of the communication link established between the terminal considered and the conference server;
- means (163, 150) for receiving from said conference server, following detection of an occurrence of an event relating to the progress of the conference, event identification data comprising at least one identification of a terminal concerned by this event;
- means (162) for generating information relating to the identity of the participant(s) involved in the event considered by analyzing said event identification data; and
- means (161, 150) for transmitting said information, via at least one said data transmission link, towards at least one of said terminals (T1) for which a data transmission link has been established.

13. Data server according to Claim 12, **characterized in that** said data server comprises means (161, 150) for dispatching a message towards at least one of said terminals for which a data transmission link has been established so as to trigger the establishment of the data transmission link for the terminal considered and the transmission in the course of the conference of said event information via said established data transmission link.

14. System, comprising:
- a data server according to Claim 12 or 13,
- a conference server (MCU) used for the implementation of a method for informing the participants to a telephone conference about the progress of said conference, said conference being established between a plurality of terminals (T1, T2, T3) accessing a telecommunication network (R1, R2, R3),
said conference server comprising:
- means (190) for analyzing the conference data streams received from the terminals (T1, T2, T3) in the course of the conference, and detecting an occurrence of at least one predefined event relating to the conduct of the conference;
- means (180) for generating event identification data for each event of which an occurrence is detected; and
- means (170) for transferring said identification data to said data server.

## Patentansprüche

1. Verfahren zum Informieren der Teilnehmer an einer Telefonkonferenz über den Verlauf der Konferenz, wobei die Konferenz mittels einer Vielzahl von Endgeräten (T1, T2, T3) durchgeführt wird, die auf ein Telekommunikationsnetz (R1, R2, R3) zugreifen, wobei eine Kommunikationsverbindung (A1, A4, A5, A6) zwischen jedem Endgerät und einem Konferenzserver (MCU) zur Übertragung mindestens eines Konferenzdatenstroms aufgebaut wird, wobei das Verfahren **dadurch gekennzeichnet ist, dass** es die folgenden Schritte aufweist, während denen:
- eine Datenübertragungsverbindung (D1, D2, D3, D4) zwischen mindestens einem der Endgeräte (T1) und einem Datenserver (PCC) aufgebaut wird (S210, S211), der auf das Telekommunikationsnetz zugreift, wobei die Datenübertragungsverbindung unabhängig von der Kommunikationsverbindung ist, die für das betrachtete Endgerät aufgebaut wurde;
- der Konferenzserver die ausgehend von den Endgeräten während der Konferenz empfangenen Konferenzdatenströme analysiert (S201, S231, S241, S251, S261), ein Eintreten mindestens eines vordefiniertem Ereignisses bezüglich des Verlaufs der Konferenz erfasst, Ereignisidentifikationsdaten erzeugt, die mindestens eine Identifikation eines Endgeräts für jedes Ereignis enthalten, dessen Eintreten erfasst wird, und die Identifikationsdaten an den Datenserver überträgt;
- der Datenserver die empfangenen Identifikationsdaten analysiert (S202, S232, S242, S252, S262), um Informationen bezüglich der Identität des oder der Teilnehmer zu erzeugen, die am betrachteten Ereignis beteiligt sind, und die Informationen über mindestens eine Datenübertragungsverbindung an mindestens eines der Endgeräte überträgt, für das eine Datenübertragungsverbindung aufgebaut wurde.

2. Verfahren nach Anspruch 1, **dadurch gekennzeichnet, dass** für ein gegebenes Endgerät die Datenübertragungsverbindung nach der Erfassung durch den Konferenzserver des Aufbaus der Kommunikationsverbindung mit dem betrachteten Endgerät aufgebaut wird.

3. Verfahren nach Anspruch 1 oder 2, **dadurch gekennzeichnet, dass** die für ein gegebenes Endgerät aufgebaute Datenübertragungsverbindung geeignet ist, damit das betrachtete Endgerät einen Datenstrom gleichzeitig mit dem Empfang des mindestens einen Konferenzdatenstroms empfangen kann.

4. Verfahren nach einem der Ansprüche 1 bis 3, **dadurch gekennzeichnet, dass** jedes Endgerät, das Empfänger der Ereignisinformationen ist, diese Informationen verarbeitet, um Informationen bezüglich des betrachteten Ereignisses zu erzeugen und auf einem Bildschirm (100) anzuzeigen, mit dem das Endgerät ausgerüstet ist.

5. Verfahren nach Anspruch 4, **dadurch gekennzeichnet, dass** die auf dem Bildschirm jedes Empfänger-Endgeräts angezeigten Informationen Informationen über die Identität des oder der vermutlichen Benutzer des oder der Endgeräte enthalten, die am betrachteten Ereignis beteiligt sind.

6. Verfahren nach einem der Ansprüche 1 bis 5, **dadurch gekennzeichnet, dass** das mindestens eine vordefinierte Ereignis zu der Gruppe von Ereignissen gehört, die enthält: "Hinzukommen eines Teilnehmers zur Konferenz", "Verlassen der Konferenz durch einen Teilnehmer", "Identifikation eines Teilnehmer als neuer aktiver Sprecher", "Wortergreifung durch einen Teilnehmer", "Zuwortmeldung eines Teilnehmers".

7. Verfahren nach Anspruch 6, **dadurch gekennzeichnet, dass** die Identifikation eines Teilnehmers als neuer aktiver Sprecher durch Sprachaktivitätsanalyse der in den Konferenzdatenströmen enthaltenen Sprachströme erhalten wird, wobei der als aktiver Sprecher identifizierte Teilnehmer der vermutliche Benutzer des Endgeräts ist, dessen Sprachstrom den höchsten Schallpegel aufweist.

8. Verfahren nach einem der Ansprüche 1 bis 7, **dadurch gekennzeichnet, dass** für mindestens eines der Endgeräte, für das eine Datenübertragungsverbindung aufgebaut wird, diese Datenübertragungsverbindung im Paket-Modus aufgebaut wird, während die Kommunikationsverbindung im Schaltungs-Modus aufgebaut wird.

9. Verfahren nach einem der Ansprüche 1 bis 8, **dadurch gekennzeichnet, dass** der Datenserver ein spezifisches Modul ist, das im Konferenzserver enthalten ist.

10. Verfahren nach einem der Ansprüche 1 bis 9, **dadurch gekennzeichnet, dass** der Datenserver eine Mitteilung an mindestens eines der Endgeräte sendet, für das eine Datenübertragungsverbindung aufgebaut wurde, um den Aufbau der Datenübertragungsverbindung für das betrachtete Endgerät und die Übertragung der Ereignisinformationen über die aufgebaute Datenübertragungsverbindung während der Konferenz auszulösen.

11. Verfahren nach einem der Ansprüche 1 bis 10, **dadurch gekennzeichnet, dass**, wenn ein betrachtetes Endgerät aus der Vielzahl von Endgeräten ein Mobiltelefon-Endgerät (T1) ist, der Datenserver an das betrachtete Mobiltelefon-Endgerät nach dem Aufbau der Kommunikationsverbindung für dieses Endgerät eine Mitteilung der Art Kurznachricht sendet, um den Aufbau der Datenübertragungsverbindung für das betrachtete Endgerät sowie den Start einer Software im betrachteten Endgerät auszulösen, um die Vorgänge durchzuführen, die darin bestehen:
- die Ereignisinformationen über die Datenübertragungsverbindung zu empfangen,
- die empfangenen Ereignisinformationen zu verarbeiten, um anzuzeigende Informationen zu erzeugen, und
- die Anzeige der anzuzeigenden Informationen durch einen Bildschirm zu steuern, der zur Ausrüstung des betrachteten Endgeräts gehört.

12. Datenserver (PCC), der zur Durchführung eines Verfahrens zur Information der Teilnehmer an einer Telefonkonferenz über den Verlauf der Konferenz verwendet wird, wobei die Konferenz zwischen einer Vielzahl von Endgeräten (T1, T2, T3) aufgebaut wird, die auf ein Telekommunikationsnetz (R1, R2, R3) zugreifen, wobei der Datenserver dazu bestimmt ist, mit einem Konferenzserver (MCU) zusammenzuwirken, der eine Kommunikationsverbindung mit jedem der Endgeräte für die Übertragung mindestens eines Konferenzdatenstroms aufgebaut hat, wobei der Datenserver enthält:
- Einrichtungen (150) zum Aufbau einer Datenübertragungsverbindung (D1, D2, D3, D4) mit mindestens einem der Endgeräte (T1), wobei die Datenübertragungsverbindung von der Kommunikationsverbindung unabhängig ist, die zwischen dem betrachteten Endgerät und dem Konferenzserver aufgebaut wurde;
- Einrichtungen (163, 150) zum Empfang vom Konferenzserver, nach einer Erfassung eines Eintretens eines Ereignisses bezüglich des Verlaufs der Konferenz, der Ereignis-Identifikationsdaten, die mindestens eine Identifikation eines von diesem Ereignis betroffenen Endgeräts enthalten;
- Einrichtungen (162) zur Erzeugung von Informationen bezüglich der Identität des oder der Teilnehmer, die an dem betrachteten Ereignis beteiligt sind, durch Analyse der Ereignis-Identifikationsdaten; und
- Einrichtungen (161, 150) zur Übertragung der Informationen über mindestens eine Datenübertragungsverbindung an mindestens eines der Endgeräte (T1), für das eine Datenübertragungsverbindung aufgebaut wurde.

13. Datenserver nach Anspruch 12, **dadurch gekennzeichnet, dass** der Datenserver Einrichtungen (161, 150) enthält, um eine Mitteilung an mindestens eines der Endgeräte zu senden, für das eine Datenübertragungsverbindung aufgebaut wurde, um den Aufbau der Datenübertragungsverbindung für das betrachtete Endgerät und die Übertragung der Ereignisinformationen über die aufgebaute Datenübertragungsverbindung während der Konferenz auszulösen.

14. System, das enthält
- einen Datenserver nach Anspruch 12 oder 13,
- einen Konferenzserver (MCU), der zur Durchführung eines Verfahrens zur Information der Teilnehmer an einer Telefonkonferenz über den Verlauf der Konferenz verwendet wird, wobei die Konferenz zwischen einer Vielzahl von Endgeräten (T1, T2, T3) aufgebaut wird, die auf ein Telekommunikationsnetz (R1, R2, R3) zugreifen,
wobei der Konferenzserver enthält:
- Einrichtungen (190) zur Analyse der von den Endgeräten (T1, T2, T3) während der Konferenz empfangenen Konferenzdatenströme, und zur Erfassung eines Eintretens mindestens eines vordefinierten Ereignisses bezüglich des Verlaufs der Konferenz;
- Einrichtungen (180) zur Erzeugung von Ereignis-Identifikationsdaten für jedes Ereignis, dessen Eintreten erfasst wird; und
- Einrichtungen (170) zur Übertragung der Identifikationsdaten an den Datenserver.
